# EUROPÄISCHE PATENTANMELDUNG

(11) **EP 1 051 048 A1**
(43) Veröffentlichungstag der Anmeldung: **08.11.2000**
(21) Anmeldenummer: 00250137.7
(22) Anmeldetag: 28.04.2000
(51) Int. Cl.: H04Q 3/66, H04Q 3/00

(54) **Verfahren und Kommunikationssystem zum Management der Auslastung von Interconnectanschlüssen**

(30) Priorität: 07.05.1999 DE 19922266; 27.07.1999 DE 19935759
(71) Anmelder: Teles AG Informationstechnologien, 10587 Berlin (DE)
(72) Erfinder: Wegener, Rochus, 13503 Berlin (DE); Paetsch, Frank, 10961 Berlin (DE)
(74) Vertreter: Müller, Wolfram Hubertus, Dipl.-Phys.

(57) **Zusammenfassung**

Die Erfindung betrifft ein Verfahren und ein Kommunikationssystem zum Management der Auslastung von Interconnectanschlüssen, über die ein erstes Kommunikationsnetz mit einem zweiten Kommunikationsnetz zusammengeschaltet ist (Interconnection). Erfindungsgemäß werden zum Erreichen einer gewünschten Auslastung der Interconnectanschlüsse TK-Verbindungen, die den Ortsverkehr betreffen, vom ersten Kommunikationsnetz (3) jeweils über einen Interconnectanschluß (5) zum zweiten Kommunikationsnetz (6) und von diesem zurück an das erste Kommunikationsnetz (3) oder weiter an ein drittes Kommunikationsnetz geroutet, das dann die Ortsverbindung zum gerufenen Teilnehmer durchschaltet. Dabei wird am Interconnectanschluß für jede Übertragungsrichtung ein Datenkanal belegt wird. Die Erfindung stellt ein Verfahren und ein Kommunikationssystem zur Verfügung zu stellen, die zur Erfüllung geschäftspolitischer oder wirtschaftlicher Vorgaben eine bestimmte gewünschte Auslastung von Interconnectanschlüssen bereitstellen.

## Beschreibung

Die Erfindung betrifft ein Verfahren und ein Kommunikationssystem zum Management der Auslastung von Interconnectanschlüssen gemäß den Oberbegriffen der Ansprüche 1 und 23 sowie eine Rauter-Einrichtung und eine TK-Einrichtung zur Durchführung des Verfahrens.

### Hintergrund der Erfindung

Mit der Liberalisierung des Telekommunikationsmarktes in Deutschland und anderen Ländern sind zu den ehemaligen Monopolisten zusätzliche Anbieter von Telekommunikationsdienstleistungen hinzugetreten. Diese verfügen in der Regel über ein eigenes sogenanntes Backbone-Netz, nicht jedoch über Datenleitungen hin zu den einzelnen Endteilnehmern. Um diese zu erreichen, ist ein Rückgriff auf das Netz des ehemaligen Monopolisten, in Deutschland die Deutsche Telekom AG, erforderlich (Überbrückung der "Last-Mile").

Zur Zusammenschaltung zwischen den Kommunikationsnetzen des ehemaligen Monopolisten und der weiteren Anbieter von Telekommunikationsdienstleistungen sind sogenannte Interconnectanschlüsse vorgesehen. Bei diesen handelt es sich im wesentlichen um 2 MBit/s-Leitungen (E1-Gruppen), die die Netze verbinden. Je Belegung eines Datenkanals am Interconnectanschluß ist an den ehemaligen Monopolist eine bestimmte Gebühr für die Zusammenschaltungsleistung zu entrichten.

Die privaten Anbieter von Telekommunikationsdienstleistungen haben in den letzten Jahren eine Vielzahl von Interconnectanschlüssen errichtet. Die durchschnittliche Auslastung der Interconnectanschlüsse liegt dabei in der Regel unter 50 %. Während die Interconnectanschlüsse während der Spitzenzeiten am späten Nachmittag und am frühen Abend in der Regel gut ausgelastet sind, ist die Auslastung zu anderen Tageszeiten gering. Dabei ist zu berücksichtigen, daß die alternativen Diensteanbieter bisher nur Regional- und Fernverbindungen einschließlich Auslands- und Mobilfunkverbindungen oder ähnliches vermitteln, eine Auslastung also allein durch derartige Verbindungen erfolgen muß.

Die schwankende bzw. geringe Auslastung der Interconnectanschlüsse kann aufgrund geschäftspolitischer Rahmenbedingungen zu gravierenden Problemen führen. Beispielsweise verlangt der ehemalige Monopolist möglicherweise eine Grundauslastung der Interconnectanschlüsse und bei deren Nichterreichen die Zahlung einer Zusatzgebühr für die Zusammenschaltungsleistungen. In diesem Zusammenhang ist es z.B. denkbar, daß von dem alternativen Diensteanbieter verlangt wird, daß die Interconnectanschlüsse im Tagesdurchschnitt eine Auslastung von mindestens 50 % aufweisen. Weiter können geschäftspolitische Vorgaben dahingehend erfolgen, daß der alternative Diensteanbieter garantieren muß, daß eine bestimmte Prozentzahl von Verbindungswünschen über das Kommunikationsnetz des alternativen Diensteanbieters erfolgreich sind.

### Aufgabe der Erfindung

Der Erfindung liegt die Aufgabe zugrunde, ein Verfahren und ein Kommunikationssystem zum Management der Auslastung von Interconnectanschlüssen zur Verfügung zu stellen, die zur Erfüllung geschäftspolitischer oder wirtschaftlicher Vorgaben eine bestimmte gewünschte Auslastung der Interconnectanschlüsse bereitstellen. Insbesondere soll eine im wesentlichen konstante hohe Auslastung der Interconnectanschlüsse erreicht werden, ohne daß die Interconnectanschlüsse dabei überlastet werden.

### Zusammenfassung der Erfindung

Diese Aufgabe wird erfindungsgemäß durch ein Verfahren mit den Merkmalen des Anspruchs 1, ein Kommunikationssystem mit den Merkmalen des Anspruchs 23, eine Routing-Einrichtung mit den Merkmalen des Anspruchs 27 und eine TK-Einrichtung mit den Merkmalen des Anspruchs 28 gelöst. Vorteilhafte und bevorzugte Ausgestaltungen der Erfindung sind in den Unteransprüchen angegeben.

Die erfindungsgemäße Lösung zeichnet sich danach dadurch aus, daß zum Erreichen einer gewünschten Auslastung der Interconnectanschlüsse TK-Verbindungen, die den Ortsverkehr betreffen, von einem ersten Kommunikationsnetz (dem Kommunikationsnetz des ehemaligen Monopolisten, das die Datenleitungen zu den einzelnen Endteilnehmern umfaßt) über einen Interconnectanschluß zu einem zweiten Kommunikationsnetz (dem Kommunikationsnetz eines alternativen Diensteanbieters) und von diesem entweder zurück an das erste Kommunikationsnetz oder weiter an ein drittes Kommunikationsnetz geroutet werden. Die Verbindung zur gerufenen TK-Einheit wird dann im ersten bzw. dritten Kommunikationsnetz durchgeschaltet. Sofern ein drittes Kommunikationsnetz Verwendung findet, ist auch ein weiterer Netzübergang von dritten Kommunikationsnetz zum ersten Kommunikationsnetz im Rahmen der Erfindung.

Erfindungsgemäß wird eine erhöhte Auslastung von Interconnectanschlüssen somit dadurch erreicht, daß die im ersten Kommunikationsnetz zu übertragenden Daten unter Zwischenschaltung eines zweiten Kommunikationsnetzes übertragen werden, das an sich keine Ortsverbindungen vermittelt, und dabei für jede Übertragungsrichtung ein Datenkanal eines Interconnectanschlusses belegt wird. Für den alternativen Diensteanbieter ist ein solches Verfahren unter wirtschaftlichen Gesichtspunkten durchaus sinnvoll. Zum einen werden die Interconnectanschlüsse ausgelastet. Zum anderen liegen die zu zahlenden Zusammenschaltungsgebühren in der Regel unterhalb der Gebühren, die der ehemalige Monopolist für die Herstellung einer Ortsverbindung verlangt. Damit können Ortsverbindungen zu einem billigeren Tarif angeboten werden.

Es ist bei dem erfindungsgemäßen Verfahren allerdings sicherzustellen, daß nicht derart viele TK-Verbindungen, die den Ortsverkehr betreffen, an Interconnectanschlüsse geleitet werden, daß diese für die wichtigeren Regional- und Fernverbindungen blockiert bzw. besetzt sind. Von Interesse ist allein, über die vorliegenden Regional- und Ferngespräche hinaus eine sinnvolle Auslastung der Interconnectanschlüsse zur Verfügung zu stellen. Hierzu kommt es darauf an, nur soviele Ortsverbindungen über die Interconnectanschlüsse zu leiten, daß diese sinnvoll ausgelastet, nicht jedoch überlastet sind. Hierzu erfolgt erfindungsgemäß ein Informationsaustausch zwischen einem Switch, der einem Interconnectanschluß jeweils auf Seiten des Netzes des alternativen Diensteanbieters zugeordnet ist, und Routing-Einrichtungen, die festlegen, in welcher Anzahl Ortsgespräche über das Netz des alternativen Diensteanbieters geroutet werden.

Dabei überwacht der einem Interconnectanschluß zugeordnete Switch jeweils die Auslastung an dem Interconnectanschluß und teilt diese Informationen den einzelnen Routing-Einrichtungen und/oder einem Managementsystem mit. Aufgrund der Auslastung der Interconnectanschlüsse wird dann festgelegt, in welchem Umfange die Routing-Einrichtungen Ortsverbindungen über das alternative Kommunikationsnetz routen. Wie bereits erläutert, wird das alternative Kommunikationsnetz dabei nur dahingehend in Anspruch genommen, daß die Daten vom Interconnectanschluß zu dem zugeordneten Switch und vom Switch sogleich an das erste Kommunikationsnetz zurückgeroutet werden.

Um eine sichere und preisgünstige Kommunikation zwischen den Interconnectanschlüssen bzw. diesen zugeordneten Switches und den Endgeräten bzw. diesen zugeordneten Routing-Einrichtungen sicherzustellen, sind verschiedene Verfahren vorgesehen.

In einer ersten Variante erfolgt eine Informationsübertragung zwischen dem Switch und der TK-Einheit während des Aufbaus einer Verbindung von der TK-Einheit zum Switch. Da zum Verbindungsaufbau ohnehin Signalisierungsinformationen zwischen TK-Einheit und Switch übertragen werden, entstehen bei der Übertragung der Informationen betreffend die Auslastung des Interconnectanschlusses keine zusätzlichen Kosten.

In einer vorteilhaften Ausgestaltung dieser Variante wird der Verbindungaufbau nach Erhalt der Informationen betreffend die Auslastung des Interconnectanschlusses und noch vor dem kostenpflichtigen Durchschalten von Nutzkanälen wieder abgebrochen. Bei dieser Ausgestaltung der Erfindung dient der Verbindungsaufbau allein einem Updaten der Daten der TK-Einheit betreffend die Auslastung des Interconnectanschlusses. Das Durchschalten einer Verbindung ist von vorherein nicht vorgesehen. Bevorzugt nimmt die TK-Einheit dabei in regelmäßigen Abständen zwecks eines Updates der Auslastung des Switches einen Verbindungsaufbau zum Switch vor.

In einer zweiten Variante erfolgt eine Informationsübertragung zwischen dem Switch und der TK-Einheit, wenn der Switch einen Verbindungswunsch der TK-Einheit betreffend eine Verbindung über den zugeordneten Interconnectanschluß ablehnt. Es liegt hier der Fall vor, daß der Interconnectanschluß ausgelastet ist und keine weiteren Ortsgespräche über den Interconnectanschluß geroutet werden sollen. Bei der Gelegenheit der Ablehnung des Verbindungswunsches wird der TK-Einheit dabei vom dem Interconnectanschluß zugeordneten Switch mitgeteilt, wie die Auslastung des Interconnectanschlusses ist. Auch hier entstehen keine gesonderten Gebühren für die Informationsübertragung.

In einer dritten Variante übersendet der Switch der TK-Einheit Informationen über die Auslastung des zugeordneten Interconnectanschlusses während einer bestehenden, durchgeschalteten Verbindung zur TK-Einheit, etwa einer Ortsverbindung der TK-Einheit, die über den Interconnectanschluß geroutet wird. Bevorzugt aber nicht notwendigerweise werden die Informationen dabei mittels DTMF- (Dual Tone Multi-Frequency) Signalen als Inbandsignal übertragen.

In einer vierten Variante nimmt der Switch oder ein mit dem Switch verbundenes Managementsystem einen Anruf an die TK-Einheit vor und übersendet der Switch bzw. das Managementsystem beim Verbindungsaufbau oder nach Herstellen einer Verbindung die Informationen über die Auslastung des Interconnectanschlusses an die TK-Einheit. Ähnlich wie bei der ersten Variante kann auch hier vorgesehen sein, daß der Verbindungaufbau nach Erhalt der Informationen an der TK-Einheit und noch vor einem kostenpflichtigen Durchschalten von Nutzkanälen wieder abgebrochen wird, so daß keine gesonderten Gebühren für die Informationsübertragung entstehen.

Bevorzugt übersenden der Switch bzw. das Managementsystem im Rahmen eines Rundrufes mehreren TK-Einheiten gleichzeitig Informationen betreffend die Auslastung eines Interconnectanschlusses, so daß die Auslastung eines Interconnectanschlusses effektiv gesteuert wird.

Der Switch, das Managementsystem oder die TK-Einheit legen in Abhängigkeit von den Informationen betreffend die Auslastung des Interconnectanschlusses fest, ob und in welchem Umfang Ortsgespräche von der TK-Einheit über den dem Switch zugeordneten Interconnectanschluß geroutet werden. Beispielsweise wird bei einer hohen Auslastung eines Interconnectanschlusses festgelegt, daß für eine bestimmte Zeit keine Ortsgespräche mehr über den Interconnectanschluß geroutet werden.

Durch regelmäßiges Updaten der Information über die Auslastung eines Interconnectanschlusses wird eine dynamische Steuerung der TK-Einheiten zur Verfügung gestellt und sichergestellt, daß ein Interconnectanschluß stets gut ausgelastet, jedoch nicht überlastet ist.

Die TK-Verbindungen können vom zweiten Kommunikationsnetz über denselben Interconnectanschluß an das erste Kommunikationsnetz zurückgeroutet werden. Ebenso kann vorgesehen sein, daß die TK-Verbindungen vom zweiten Kommunikationsnetz über einen weiteren Interconnectanschluß an das erste Kommunikationsnetz zurückgeroutet werden. Bei Routen der TK-Verbindungen weiter an ein drittes Kommunikationsnetz findet ebenfalls ein weiterer Interconnectanschluß Verwendung.

In einer bevorzugten Ausgestaltung der Erfindung erfolgt bei einer rufenden TK-Einheit, die eine Ortsverbindung zu einer gerufenen TK-Einheit wünscht, ein Routing über einen Interconnectanschluß dadurch, daß der Rufnummer der gerufenen TK-Einheit bei der Signalisierung eine definierte Kennung hinzugefügt wird. Hierzu handelt es sich beispielsweise zum einen um die Einwählnummer in das zweite Kommunikationsnetz und zum anderen um eine definierte Zusatznummer, die eine bestimmte Regional- oder Fernverbindung betrifft. Beispielsweise handelt es sich um eine bestimmte Rufnummer auf den Bahamas, die an sich nicht genutzt wird.

Die zugehörige Ortsvermittlungsstelle des ersten Kommunikationsnetzes routet die Verbindung aufgrund der hinzugefügten Kennung an einen Interconnectanschluß zum zweiten Kommunikationsnetz. Die Zusatznummer ist dabei erforderlich um sicherzustellen, daß der Verbindungswunsch auch tatsächlich zum zweiten Kommunikationsnetz geroutet wird. So sind die Ortsvermittlungsstellen etwa der Deutsche Telekom AG derart programmiert, daß Ortsverbindungen im eigenen Netz grundsätzlich nicht an ein anderes Netz weitergeleitet werden.

Der dem Interconnectanschluß zugeordnete Switch erkennt dann anhand der Kennung, daß es sich um eine Ortsverbindung handelt, und routet die Verbindung sogleich an das erste Kommunikationsnetz zurück bzw. weiter an ein drittes Kommunikationsnetz. Zuvor entfernt er dabei die hinzugefügte Kennung und fügt die gewünschte Ortskennung hinzu, sofern diese noch nicht in der Wählinformation enthalten ist.

Eine rufende TK-Einheit weist bevorzugt mindestens ein TK-Endgerät und eine Router-Einrichtung, insbesondere einen Least-Cost-Router auf, wobei eine Informationsübertragung bzw. Signalisierung mit einem einem Interconnectanschluß zugeordneten Switch über die Router-Einrichtung erfolgt. An die Router-Einrichtung sind in der Regel eine Vielzahl von Endgeräten angeschlossen. Die Router-Einrichtung bestimmt, in welchem Umfang Gespräche, insbesondere Ortsgespräche, an einen Interconnectanschluß geroutet werden. Signalisierungsinformationen zwischen dem Switch und der TK-Einheit können auf beliebige Weise ausgetauscht werden, insbesondere als Außenbandsignal über einen gesonderten Signalisierungskanal, etwa ISDN-D-kanal, über einen gesonderten Nutzkanal, oder mittels einer Inband-Signalisierung.

Das erfindungsgemäße Kommunikationssystem zum Management der Auslastung von Interconnectanschlüssen weist auf: a) erste Einrichtungen, die jeweils einem Interconnectanschluß zugeordnet sind und die Mittel aufweisen, die die Auslastung des zugeordneten Interconnectanschlusses überwachen; b) zweite Einrichtungen, die den TK-Einheiten zugeordnet sind und die erste Mittel aufweisen, durch die die Wählinformation abgehender Rufe mit einer Kennung versehbar ist, auf Grund derer abgehende, Ortsverbindungen betreffende Rufe an das zweite Kommunikationsnetz gerautet werden, wobei: c) die ersten Einrichtungen Mittel aufweisen, die in der Wählinformation die eingefügte Kennung und damit das Vorliegen einer Ortsverbindung erkennen, und die Verbindung daraufhin an das erste Kommunikationsnetz zurück oder ein drittes Kommunikationsnetz weiterrouten und d) die ersten Einrichtungen an die zweiten Einrichtungen oder ein Managementsystem Informationen betreffend die Auslastung der Interconnectanschlüsse senden und die zweiten Einrichtungen jeweils zweite Mittel aufweisen, die in Abhängigkeit von Befehlen der ersten Einrichtungen oder des Managementsystems bzw. in Abhängigkeit von der Auslastung der Interconnectanschlüsse die Anzahl der über das zweite Kommunikationsnetz zu routenden Ortsverbindungen festlegen.

Die genannten Mittel sind funktionell zu verstehen und können durch Hardware und/oder Software realisiert werden. Insbesondere können die verschiedenen Funktionalitäten durch eine Steuereinheit, die etwa aus einem üblichen Mikroprozessor oder spezialisierter Hardware mit Peripheriebausteinen und geeigneter Software besteht, realisiert werden.

Bei den ersten Einrichtungen handelt es sich bevorzugt um Switch-Einrichtungen, die jeweils unmittelbar hinter den Interconnectanschlüssen im zweiten Kommunikationsnetz angeordnet sind und die jeweils die Switch-Matrix der über den jeweiligen Interconnectanschluß geführten Verbindungen verwalten. Bei den zweiten Einrichtungen handelt es sich bevorzugt um Routing-Einrichtungen, insbesondere Least-Cost-Router, die teilnehmeranschlußseitig angeordnet sind, wobei die Routing-Einrichtungen als eigene Einheiten ausgebildet oder in die TK-Einheiten integriert sein können.

### Beschreibung bevorzugter Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine erfindungsgemäße Telekommunikations-Infrastruktur;
- Figur 2 -: ein Ablaufdiagramm beim Verbindungsaufbau gemäß dem erfindungsgemäßen Verfahren;
- Figur 3 -: ein Ablaufdiagramm der Verfahrensschritte eines einem Interconnectanschluß zugeordneten Switch bei der Überwachung der Auslastung des Interconnectanschlusses und
- Figur 4 -: eine alternative erfindungsgemäße Telekommunikations-Infrastruktur.

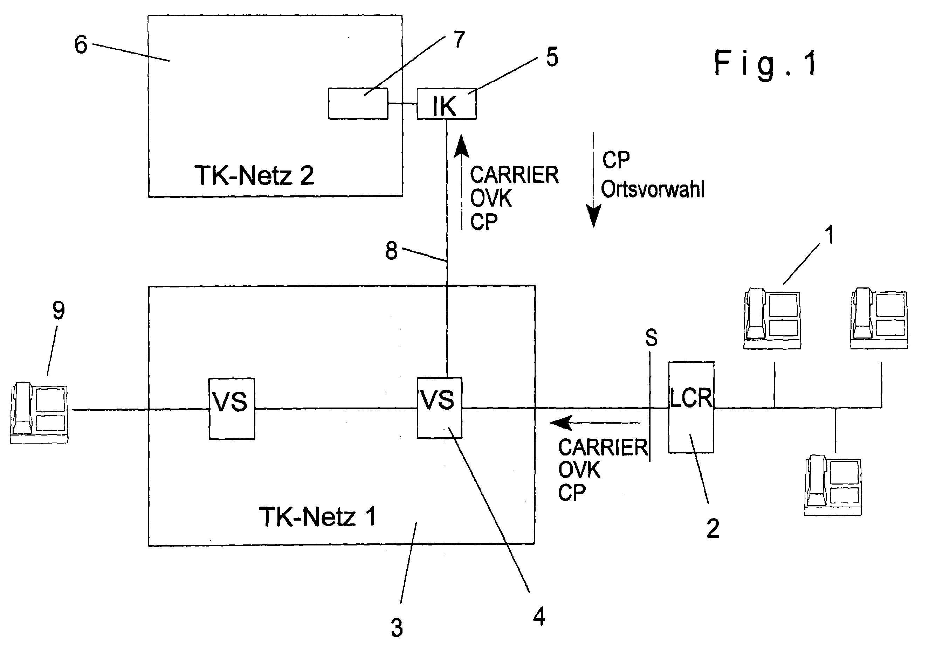

Figur 1 zeigt schematisch eine erfindungsgemäße Telekommunikationsinfrastruktur. An einen ISDN-S₂ₘ-Anschluß oder ISDN-S₀-Anschluß sind über einen lokalen Bus teilnehmerseitig mehrere Telekommunikations-Einheiten (TK-Einheiten) 1, im dargestellten Ausführungsbeispiel ISDN-Telefone, angeschlossen. Dem Teilnehmeranschluß ist ein Least-Cost-Router (LCR) 2 zugeordnet, der einen Verbindungsaufbau und -abbau der Verbindungen der TK-Einheiten 1 steuert. Gegebenenfalls ist zusätzlich eine Telekommunikationsanlage (nicht dargestellt) vorgesehen, an die die TK-Einheiten 1 zunächst angeschlossen sind. Der Least-Cost-Router 1 ist dann zwischen der Telekommunikationsanlage und der zugehörigen Vermittlungsstelle angeordnet. Derartige Anordnungen sind dem Fachmann an sich bekannt.

Für die Erfindung kommt es nicht darauf an, ob der Least-Cost-Router 1 als eigenständiges Gerät ausgeführt oder in ein anderes Gerät integriert ist. So kann vorgesehen sein, daß der Least-Cost-Router 1 in eine Telekommunikationsanlage oder ein Endgerät, beispielsweise ein Telefon, integriert ist.

Die TK-Einheiten 1 sind über die S₂ₘ bzw. S₀-Schnittstelle an ein erstes Kommunikationsnetz 3 (TK-Netz 1) angeschlossen. Dieses weist zahlreiche lokale Teilnehmervermittlungsstellen VS (4) auf. Über sogenannte Interconnectanschlüsse (IK) 5 ist das erste Telekommunikationsnetz 3 mit einem zweiten Telekommunikationsnetz 6 (TK-Netz 2) zusammengeschlossen. Der Interconnectanschluß 5 stellt einen Netzübergang zwischen dem ersten Kommunikationsnetz 3 und dem zweiten Kommunikationsnetz 6 zur Verfügung. Jedem Inter connectanschluß 5 ist auf Seiten des zweiten Kommunikationsnetzes 6 unmittelbar ein Switch 7 zugeordnet, der das Durchschalten und die Verbindungssteuerung der über den Inter connect-Anschluß 5 eingehenden bzw. ausgehenden Verbindungen steuert.

Die Verbindung 8 zwischen einer Vermittlungsstelle 4 und einem Interconnectanschluß 5 stellt eine 2-MBit/s-Leitung dar gemäß dem PCM 30-System. Sie weist somit 30 Sprechkanäle und zwei Signalisierungskanäle auf. Alternativ werden 31 Sprechkanäle und ein Signalisierungskanal zur Verfügung gestellt. Über jeden Inter connectanschluß 5 können somit 15 eingehende und 15 ausgehende Gespräche verbunden werden. Für jede Gesprächsverbindung ist eine bestimmte Gebühr an den Betreiber der Kommunikationsnetzes 3 zu zahlen.

Es wird darauf hingewiesen, daß in Figur 1 nur ein Interconnectanschluß 5 dargestellt ist. Tatsächlich sind zwischen dem ersten Kommunikationsnetz 3 und dem zweiten Kommunikationsnetz 6 jedoch eine Vielzahl von im wesentlichen baugleichen Interconnectanschlüssen vorgesehen, um eine effektive Zusammenschaltung der Kommunikationsnetze zu ermöglichen.

An das erste Telekommunikationsnetz 3 sind weitere TK-Einheiten 9 angeschlossen, zu denen von der ersten TK-Einheit 1 eine Verbindung hergestellt werden kann.

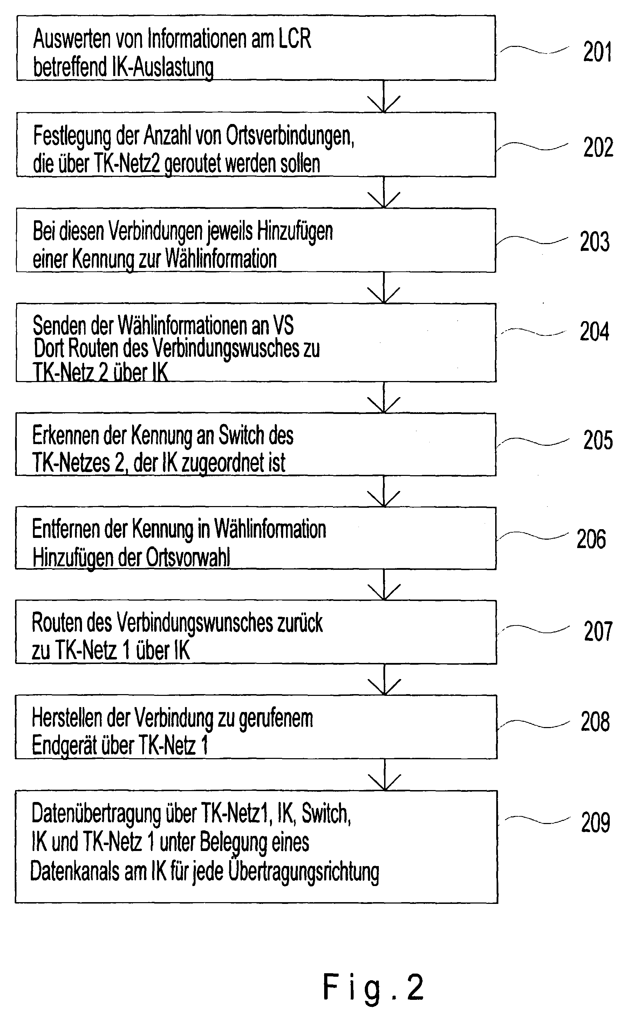

Das erfindungsgemäße Verfahren zum Management der Auslastung der Interconnectanschlüsse 5 wird anhand des Ablaufdiagramms der Figur 2 im einzelnen erläutert.

Zunächst werden am Least-Cost-Router 2 Informationen betreffend die derzeitige Auslastung der Interconnectanschlüsse 5 ausgewertet (Schritt 201). Der Least-Cost-Router 2 erhält diese Informationen jeweils von einem einem Interconnectschluß 5 zugeordneten Switch 7 oder einem Management-System, wie noch beschrieben werden wird. Anhand der Information betreffend die Auslastung der Interconnectanschlüsse 5 wird am Least-Cost-Router 2, alternativ vom Management-System, alternativ direkt vom Switch 7 festgelegt, in welchem Umfang Ortsverbindungen gemäß der nachfolgend beschriebenen Art und Weise über das zweite Kommunikationsnetz 6 geroutet werden sollen (Schritt 202).

Beispielsweise wird festgelegt, daß am Least-Cost-Router 2 jedes zweite Ortsgespräch über das zweite Kommunikationsnetz 6 geroutet werden soll.

Bei diesen Verbindungen fügt der LCR 2 bei der Signalisierung der Wählinformation betreffend die Verbindung zu einer gerufenen TK-Einheit 9 eine Kennung hinzu (Schritt 203). Diese Kennung besteht in einem bevorzugten Ausführungsbeispiel zum einen in der Einwählnummer (CARRIER)des zweiten Kommunikationsnetzes 6 und zum anderen in einer Zusatznummer (OVK - Ortsverbindungs-Kennung), die eine Regional- oder Fernverbindung betrifft. Dies wird an einem Beispiel erläutert.

Beispielsweise lautet die Rufnummer bzw. Zieladresse CP (Called Party Number) 399 28 00. Da es sich um eine Ortsverbindung handelt, weist die CP keine Vorwahl auf. Zu einem Routing der Verbindung an das zweite Kommunikationsnetz 6 setzt der LCR 2 vor die CP zum einem die Einwählnummer des zweiten Kommunikationsnetzes 6. Er bestimmt dabei anhand von internen Routing-Tabellen, welches Kommunikationsnetz am kostengünstigsten ist. Als Beispiel sei angenommen, daß es sich bei dem zweiten Kommunikationsnetz um das Netz des Anbieters TALKLINE mit der Einwählnummer 01050 handelt.

Aus Gründen, die später ersichtlich werden, wird zusätzlich zu der Einwählnummer (CARRIER) des zweiten Kommunikationsnetzes die Vorwahl einer bestimmten Auslandsverbindung hinzugefügt. Beispielsweise wird als Zusatznummer (OVK) die Ziffernfolge 005922, die die Stadt Georgetown im Staat Goyana betrifft, zugefügt. Die Ziffernfolge der Wählinformation nach Verlassen des LCR 2 lautet somit 01050 005922 3992800, wobei die Ziffern "01050" den Carrier identifizieren, die Ziffern "005922" die Auslandsnummer und die Ziffern "399 28 00" die Rufnummer CP des gerufenen Teilnehmers 9.

Diese Wählinformationen werden nun an die Vermittlungsstelle 4 gesandt (Schritt 204). Aufgrund der hinzugefügten Kennung wird der Verbindungswunsch von der Vermittlungsstelle 4 über die 2 MBit/s Leitung 8 an den Interconnectanschluß 5 geroutet, das den Netzübergang zum Netz 6 des alternativen Carriers (im vorgenannten Ausführungsbeispiel des Anbieters TALKLINE) zur Verfügung stellt. Die Vermittlungsstelle 4 leitet den Verbindungswunsch dabei aufgrund der hinzugefügten Kennung an das zweite Kommunikationsnetz 6 weiter. Die Zusatznummer (005922) wurde deswegen hinzugefügt, um sicherzustellen, daß auch tatsächlich ein Routing zum zweiten Kommunikationsnetz 6 erfolgt. So sieht die Vermittlungsstelle 4 möglicherweise vor, das Ortsverbindungen betreffende Gespräche grundsätzlich nicht an einen alternativen Carrier weitergeroutet werden, auch wenn die Einwählnummer des alternativen Carriers angegeben ist.

Der Verbindungswunsch wird im beschriebenen Ausführungsbeispiel nun von der Vermittlungsstelle 4 über den Interconnectanschluß 5 an den zugeordneten Switch 7 des zweiten Telekommunikationsnetzes 6 geroutet. Wenn der Interconnectanschluß 5 aufgrund Überlastung besetzt sein sollte, so wird dies dem LCR 2 signalisiert, der daraufhin ein alternatives Routing vornimmt. Für den Fall, daß der Interconnectanschluß 5 nicht besetzt ist, erkennt nun der Switch 7 anhand der hinzugefügten Kennung, insbesondere der hinzugefügten Zusatznummer (OVK), daß es sich hier um eine Ortsverbindung handelt (Schritt 205). Daraufhin entfernt der Switch die hinzugefügte Kennung von der Wählinformation (Schritt 206) und fügt die Ortsvorwahl hinzu, die er aus der Ortsvorwahl des rufenden Teilnehmers bestimmt.

Alternativ wird bereits im LCR 2 die Ortsvorwahl hinzugefügt, so daß die Nummer im vorgenannten Beispiel "01050 005922 30 3992800" lautete. Auch sind alternative Signalisierungsverfahren möglich, etwa unter Verwendung der Subadresse im SETUP-Protokolldatenelement des ISDN Standards.

Anschließend wird die Verbindung sogleich über den Interconnectanschluß 5 zurück zum ersten Telekommunikationsnetz 3 geroutet. Der Verbindungswunsch wird somit nicht weiter in das zweite Telekommunikationsnetz 6 geleitet, sondern sogleich an das erste Telekommunikationsnetz 1 retouniert (Schritt 207). Dabei ist es allerdings ebenfalls möglich, daß ein Routen der Verbindung zurück zum ersten Kommunikationsnetz 3 nicht über den Interconnectanschluß 5, sondern einen anderen Interconnectanschluß zwischen den beiden Netzen 3, 6 erfolgt.

Über das erste Telekommunikationsnetz 3 wird nun eine Verbindung zu dem gerufenen Endgerät 9 hergestellt (Schritt 108). Der Verbindungswunsch wird von dem Inter connectanschluß 5 dabei möglicherweise in die gleiche Vermittlungsstelle 4 zurückgerautet, möglicherweise jedoch auch an eine andere Vermittlungestelle des ersten Kommunikationsnetzes 3.

Nach Herstellen der Verbindung erfolgt nun eine Datenübertragung von der rufenden TK-Einheit 1 zur gerufenen TK-Einheit 9 über das erste Telekommunikationsnetz 3 (bzw. der Vermittlungsstelle 4), von diesem zum Interconnectanschluß 5 und weiter zum Switch 7 des zweiten Telekommunikationsnetzes 6, von Switch 7 zurück über den Interconnectanschluß 5 (oder einen anderen Interconnectanschluß) an das erste Telekommunikationsnetz 3 und von diesem zum gerufenen Endgerät 9. Dabei wird je Übertragungsrichtung ein Datenkanal am Interconnectanschluß 5 belegt.

Die anfallenden Kosten sind gleich den an den Betreiber des ersten Kommunikationsnetzes 3 zu zahlenden Kosten für die Belegung eines Kanals am Interconnectanschluß 5. Diese Kosten liegen in der Regel unterhalb der Kosten, die der Betreiber des ersten Kommunikationsnetzes 3 für die Herstellung einer Ortsverbindung verlangt.

Das erfindungsgemäße Verfahren beruht gewissermaßen auf dem Trick, daß eine lokale Verbindung über das erste Kommunikationsnetz einen "Umweg" über das zweite Kommunikationsnetz nimmt, was erwünschter Weise zu einer zusätzlichen Auslastung eines dabei in Anspruch genommenen Interconnectanschlusses 5 mit einem Datenkanal je Übertragungsrichtung führt.

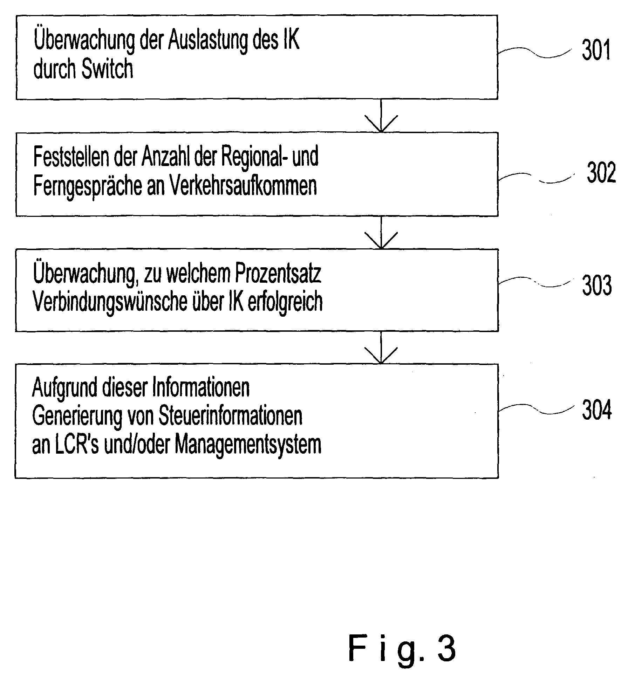

Es wird darauf hingewiesen, daß eine Belegung von Datenkanälen eines Interconnectanschlusses 5 kontrolliert zu erfolgen hat, d.h. nur in einem Umfange, das eine sinnvolle Auslastung zusätzlich zur Belegung der Interconnectanschlüsse durch Regional- und Ferngespräche, die Vorrang haben, erfolgt. Wie in Figur 3 dargestellt, überwacht der dem Interconnectanschluß 5 zugeordnete Switch 7 dabei die Auslastung des Interconnectanschlusses 5 (Schritt 301). Insbesondere wird überwacht, in welchem Umfange die Interconnecteinheit 5 durch Regional- und Ferngespräche bzw. in welchem Umfange sie durch Ortsgespräche ausgelastet ist (Schritt 302). Weiter wird überwacht, wieviele Verbindungswünsche über den Interconnectanschluß 5 erfolgreich sind (Schritt 303) und wieviele Gespräche wegen Überlastung abgewiesen werden. So müssen die Betreiber eines zweiten Kommunikationsnetzes 6 in der Regel garantieren, daß eine bestimmte Prozentzahl der Verbindungswünsche, etwa 50 %, erfolgreich sind.

Aufgrund der Informationen betreffend die Auslastung der Interconnecteinheit 5 generiert der Switch Signalisierungsinformationen, die er an den LCR 2 bzw. ein Managementsystem weiterleitet. Auf diese Weise erfolgt eine Rückkopplung an die LCR's 2, die ein Routing der Ortsverbindungen über das zweite Kommunikationsnetz 6 veranlassen. Beispielsweise teilt der Switch 7 einem Managementsystem oder einem oder mehreren LCR's 2 mit, daß die Interconnecteinheit 5 zu 80 % ausgelastet ist und daher keine Ortsgespräche mehr an die Interconnecteinheit geroutet werden sollen. In einem anderen Beispiel stellt der Switch fest, daß die Interconnecteinheit nur zu 20 % ausgelastet ist und daher eine gewisse Anzahl von Ortsgesprächen an die Interconnecteinheit 5 gesandt werden sollen.

Nachfolgend wird aufgezeigt, auf welche Weise eine Kommunikation zwischen einem Switch 7 und einem LCR 2 erfolgt. Hier sieht die Erfindung mehrere Varianten vor:

In einer ersten Variante erfolgt eine Informationsübertragung zwischen dem Switch 7 und dem LCR 2 während des Aufbaus einer Verbindung vom LCR 2 zum Switch 7. Die Informationen betreffend die Auslastung des Interconnectanschlusses 5 werden dabei den zum Verbindungsaufbau erforderlichen Signalisierungsinformationen zugefügt bzw. in diese eingebettet.

Dabei kann vorgesehen sein, daß sich an den Verbindungsaufbau ein Durchschalten der aufgebauten Verbindung zu einem gerufenen Teilnehmer anschließt. In einer bevorzugten Variante wird der Verbindungaufbau nach Erhalt der Informationen und noch vor dem kostenpflichtigen Durchschalten von Nutzkanälen jedoch durch den LCR 2 wieder abgebrochen. Der Verbindungsaufbau ist nur das Vehikel zum Erhalt der Informationen betreffend die Auslastung des Interconnectanschlusses 5 vom Switch 7. Ein Durchschalten von Verbindungen ist von vorherein nicht vorgesehen. Da die Verbindung abgebrochen wird, bevor Kosten entstehen, erfolgt das Updaten der Information über die Auslastung des Switch 7 ohne Entstehung von Kosten. Beipielsweise nimmt der LCR2 in regelmäßigen Abständen zwecks eines Updates einen Verbindungsaufbau mit darauffolgendem Verbindungsabbau vor.

In einer zweiten Variante erfolgt eine Informationsübertragung zwischen dem Switch 7 und dem LCR 2, wenn der Switch 7 einen Verbindungswunsch des LCR 2 betreffend eine Verbindung über den Interconnectanschluß 5 ablehnt. Der Besetzt-Fall wird somit dazu ausgenutzt, dem LCR 2 mitzuteilen, wie stark der Interconnectanschluß 5 ausgelastet ist.

Entsprechende Informationen werden den Signalisierungsinformationen betreffend die Verbindungsablehnung zugefügt bzw. in diese eingebettet.

In einer dritten Variante erfolgt eine Informationsübertragung zwischen dem Switch 7 und dem LCR 2 während einer bestehenden Verbindung zwischen Switch 7 und LCR 2, also bei einer durchgeschalteten Verbindung. Die Information wird dabei bevorzugt als Inband-Information über einen durchgeschalteten Nutzkanal (ISDN-B-Kanal) übertragen, beispielsweise mittels DTMF- (Dual Tone Multi-Frequency) Signalen. Alternativ erfolgt eine Informationsübertragung über eine Außenbandsignalisierung. Auch hier entstehen keine zusätzlichen Kosten für die Informationsübertragung.

In einer vierten Variante der Erfindung nimmt der Switch 7 zur Informationsübertragung einen Anruf beim LCR 2 vor. Während des Verbindungsaufbaus oder nach Herstellen einer Verbindung übersendet der Switch die fraglichen Informationen an den LCR 2.

Dabei kann wiederum vorgesehen sein, daß der Verbindungaufbau nach Erhalt der Informationen am LCR 2 und noch vor einem kostenpflichtigen Durchschalten von Nutzkanälen wieder abgebrochen wird, so daß keine gesonderten Gebühren für die Informationsübertragung entstehen. Für diese Variante ist eine Informationsübertragung mittels Außenbandsignalen vorgesehen. Sofern eine kostenpflichtige Verbindung vom rufenden Switch 7 zum LCR 2 durchgeschaltet wird, erfolgt eine Informationsübertragung in der Regel über Inbandsignale.

Bevorzugt übersendet der Switch 7 im Rahmen eines Rundrufes mehreren LCR's 2 gleichzeitig Informationen betreffend die Auslastung eines Interconnectanschlusses 5, so daß die Auslastung des Interconnectanschlusses effektiv gesteuert werden kann.

In einer alternativen Ausgestaltung erfolgt eines Informationsübertragung vom Switch 7 zum LCR 2 nicht direkt, sondern über ein Managementsystem, das mit dem Switch 7 und ggf. weiteren Switches anderer Interconnectanschlüsse verbunden ist und von diesen Informationen über die jeweilige Auslastung eines Interconnectanschlusses 5 erhält. Das Managementsystem nimmt dabei einen Anruf bei einem oder mehreren LCRs zwecks einer Informationsübertragung vor. In der Regel wird das Managementsystem dabei bereits festlegen, in welchem Umfange für einen bestimmten Zeitraum vom LCR 2 Ortsgespräche über einen Interconnectanschluß 5 geroutet werden sollen und teilt diese Information dem LCR 2 mit.

Bei allen Varianten dient die Informationsübertragung wie bereits erläutert dem Zweck festzulegen, ob und in welchem Umfang Ortsgespräche über den dem Switch 7 zugeordneten Interconnectanschluß 5 geroutet werden sollen. Mit anderen Worten, die Router 2 werden in Abhängigkeit vom Verkehrsaufkommen an den Interconnectanschlüssen 5 hinsichtlich des Routens von Ortsgesprächen an eine Interconnecteinheit 5 dynamisch gesteuert.

Die Festlegung, in welchem Maße Ortsgespräche an eine Interconnectanschluß 5 geroutet werden, nimmt dabei der LCR 2 anhand der erhaltenen Informationen über die Auslastung des Interconnectanschlusses 5 vor, oder alternativ ein Managementsystem, das mit dem LCR 2 und dem Switch 7 gekoppelt ist. Auch kann vorgesehen sein, daß bereits der Switch 7 die genaue Festlegung vornimmt, wieviele Gespräche der LCR 2 in einem vorgegebenen Zeitraum an den Interconnectanschluß 5 routet. Auch in diesem Sinne ist der Begriff "Informationsübertragung" zu verstehen.

Es wird darauf hingewiesen, daß die erfindungsgemäße Infrastruktur zur Durchführung des Verfahrens bevorzugt mehrere Interconnectanschlüsse 5 mit Switches 7 sowie zahlreiche LCRs 2 mit angeschlossenen TK-Endeinrichtungen 1 aufweist. Dabei sind einem Interconnectanschluß 5 jeweils mehrere LCRs 2 primär zugeordnet, so daß durch regelmäßige Mitteilung der Auslastung des Interconnectanschlusses 5 an die jeweils zugeordneten LCRs 2 eine dynamische Steuerung der LCRs 2 erfolgt und sichergestellt wird, daß ein Interconnectanschluß 5 stets gut ausgelastet, jedoch nicht überlastet ist.

Die Informationsübertragung zwischen dem Switch 7 des zweiten Kommunikationsnetzes und dem LCR 2 kann auf verschiedene Weise erfolgen. So kann die Informationsübertragung mittels einer Außenbandsignalisierung, etwa auf einem Signalisierungskanal eines PCM30-Systems, als auch mittels einer Inbandsignalisierung, etwa mittels DTMF-Signalen, erfolgen. Auch kann für eine Außenband-Signalisierung ein bestimmter Datenkanal zwischen dem LCR 2 und dem Switch 7 freigehalten werden.

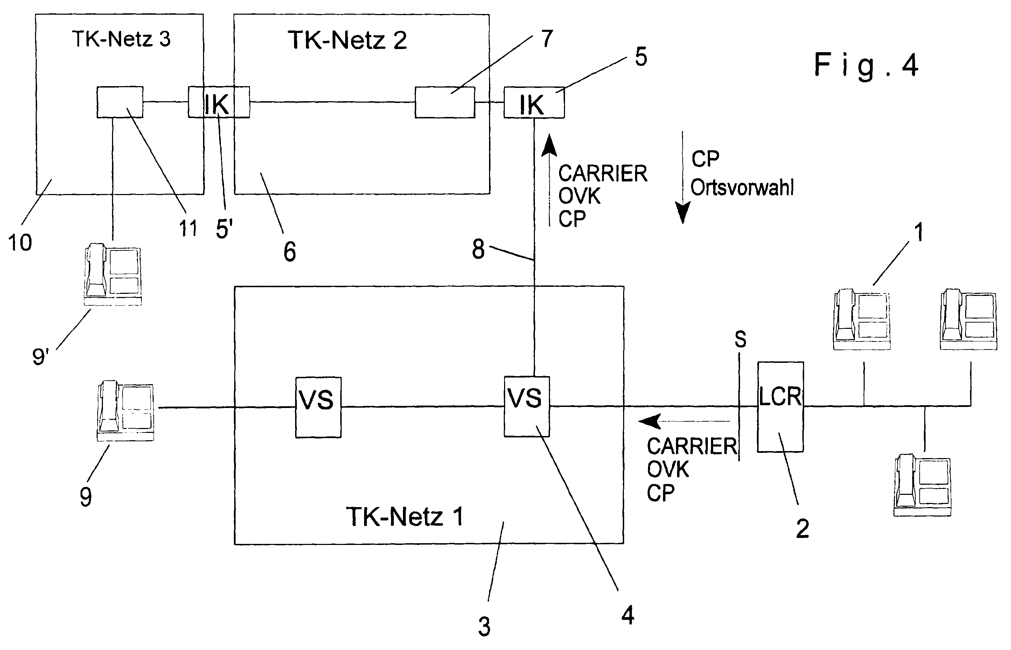

Fig. 4 zeigt eine alternative TK-Infrastruktur, bei der das zweite Kommunikationnetz 6 über Interconnectanschlüsse 5' (von denen zur besseren Übersichtlichkeit wiederum nur einer - schematisch - dargestellt ist) mit einem dritten Kommunikationsnetz 10 (TK-Netz 3) verbunden ist, das ebenfalls Ortsverbindungen vermittelt. Bei prinzipiell gleichem Verfahren wie in Bezug auf die vorherigen Figuren beschrieben, erfolgt hier vom Switch 7 ein Weiterrouten einer Verbindung zum dritten Kommunikationsnetz 10, wobei etwa über einen weiteren Switch 11 die Ortsverbindung zum Endgerät 9' hergestellt wird.

Dabei kann auch vorgesehen sein, daß vom dritten Kommunikationsnetz 10 erneut ein Netzübergang zum ersten Kommunikationsnetz 3 erfolgt (nicht dargestellt) und die Ortsverbindung im ersten Kommunikationsnetz 3 zum gerufenen Endgerät durchgestellt wird.

Es wird darauf hingewiesen, daß die Erfindung vorstehend in Bezug auf digitale ISDN-Netze beschrieben wurde. Es ist bei grundsätzlich gleichen Verfahren und gleicher TK-Infrastruktur jedoch ebenso möglich, die Erfindung bei analogen Teilnehmerendgeräten zu verwirklichen. Im LCR 2 würde dann der Rufnummer CP des gerufenen Teilnehmers etwa durch DTMF-Signale oder direkte Pulswahl die zusätzliche Kennung hinzugefügt. Ab der Stufe der Vermittlungsstelle 4 erfolgt eine Datenübertragung dann ohnehin nur noch digital.

Die Erfindung beschränkt sich in ihrer Ausführung nicht auf das vorstehend beschriebene Ausführungsbeispiel. Wesentlich für die Erfindung ist allein, daß zum Erreichen einer gewünschten, vorgebbaren Auslastung von Interconnectanschlüssen in einem festlegbaren Maße TK-Verbindungen, die den Ortsverkehr betreffen, zu einem zweiten Kommunikationsnetz geroutet und von diesem über einen Interconnectanschluß sogleich an das erste Kommunikationsnetz zurückgeroutet werden, wobei am Interconnectanschluß ein Datenkanal belegt wird.

## Patentansprüche

1. Verfahren zum Management der Auslastung von Interconnectanschlüssen, über die ein erstes Kommunikationsnetz mit einem zweiten Kommunikationsnetz zusammengeschaltet ist (Interconnection), wobei bei der Übertragung von Daten zwischen einer rufenden und einer gerufenen TK-Einheit die zugehörige TK-Verbindung zunächst über das erste Kommunikationsnetz, das den Ortsverkehr abwickelt, geschaltet wird, und dann an das zweite Kommunikationsnetz weitergegeben wird,
**dadurch gekennzeichnet,**
daß zum Erreichen einer gewünschten Auslastung der Interconnectanschlüsse TK-Verbindungen, die den Ortsverkehr betreffen, vom ersten Kommunikationsnetz (3) jeweils über einen Interconnectanschluß (5) zum zweiten Kommunikationsnetz (6) und von diesem zurück an das erste Kommunikationsnetz (3) oder weiter an ein drittes Kommunikationsnetz geroutet werden, worauf das erste Kommunikationsnetz (3) bzw. dritte Kommunikationsnetz (10) die Verbindungen jeweils zur gerufenen TK-Einheit (9) durchschaltet.

2. Verfahren nach Anspruch 1, **dadurch gekennzeichnet,** daß die TK-Verbindungen vom zweiten Kommunikationsnetz (6) über denselben Interconnectanschluß (5) an das erste Kommunikationsnetz (3) zurückgeroutet werden.

3. Verfahren nach Anspruch 1, **dadurch gekennzeichnet,** daß die TK-Verbindungen vom zweiten Kommunikationsnetz (6) über einen weiteren Interconnectanschluß an das erste Kommunikationsnetz (3) zurückgeroutet oder an das dritte Kommunikationsnetz weitergeroutet werden.

4. Verfahren nach mindestens einem der Ansprüche 1 bis 3, **dadurch gekennzeichnet,** daß die Anzahl der Ortsgespräche, die über Interconnectanschlüsse (5) geleitet werden, dynamisch festgelegt wird, insbesondere in Abhängigkeit von der Anzahl der über die Interconnectanschlüsse (5) geleiteten Regional- und Fernverbindungen.

5. Verfahren nach mindestens einem der Ansprüche 1 bis 4, **dadurch gekennzeichnet,** daß zur Festlegung der Anzahl der Ortsgespräche, die über Interconnectanschlüsse (5) geleitet werden, zwischen einem Switch (7), der einem Interconnectanschluß (5) jeweils zugeordnet ist und die Auslastung an dem Interconnectanschluß (5) überwacht, und mindestens einer TK-Einheit (1, 2) eine Informationsübertragung dahingehend stattfindet, daß der Switch (7) oder ein mit dem Switch (7) verbundenes Managementsystem der TK-Einheit (1, 2) Informationen betreffend die Auslastung des Interconnectanschlusses bzw. die Anzahl der über den Interconnectanschluß zu routenden Verbindungen übersendet.

6. Verfahren nach Anspruch 5, **dadurch gekennzeichnet,** daß eine Informationsübertragung zwischen dem Switch (7) und der TK-Einheit (2) während des Aufbaus einer Verbindung von der TK-Einheit (2) zum Switch (7) erfolgt.

7. Verfahren nach Anspruch 6, **dadurch gekennzeichnet,** daß der Verbindungaufbau nach Erhalt der Informationen und noch vor dem kostenpflichtigen Durchsohalten von Nutzkanälen wieder abgebrochen wird.

8. Verfahren nach Anspruch 7, **dadurch gekennzeichnet,** daß die TK-Einheit (2) in regelmäßigen Abständen zwecks eines Updates der Auslastung des Switches (7) einen Verbindungsaufbau zum Switch (7) vornimmt.

9. Verfahren nach Anspruch 5, **dadurch gekennzeichnet,** daß eine Informationsübertragung zwischen dem Switch (7) und der TK-Einheit (2) erfolgt, wenn der Switch (7) einen Verbindungswunsch der TK-Einheit (2) betreffend eine Verbindung über den zugeordneten Interconnectanschluß (5) ablehnt.

10. Verfahren nach Anspruch 5, **dadurch gekennzeichnet,** daß der Switch (7) der TK-Einheit (2) Informationen über die Auslastung des Interconnectanschlusses bzw. die Anzahl der über den Interconnectanschluß (5) zu routenden Verbindungen während einer bestehenden Verbindung zur TK-Einheit (2) übersendet.

11. Verfahren nach Anspruch 10, **dadurch gekennzeichnet,** daß die Informationen während der bestehenden Verbindung mittels DTMF-Signalen übertragen werden.

12. Verfahren nach Anspruch 5, **dadurch gekennzeichnet,** daß der Switch (7) oder das mit dem Switch (7) verbundene Managementsystem einen Anruf an die TK-Einheit (2) vornimmt und beim Verbindungsaufbau oder nach Herstellen einer Verbindung die Informationenen an die TK-Einheit (2) übersendet.

13. Verfahren nach Anspruch 12, **dadurch gekennzeichnet,** daß der Verbindungaufbau nach Erhalt der Informationen und noch vor einem kostenpflichtigen Durchschalten von Nutzkanälen wieder abgebrochen wird.

14. Verfahren nach Anspruch 12 oder 13, **dadurch gekennzeichnet,** daß der Switch (7) bzw. das Managementsystem im Rahmen eines Rundrufes mehreren TK-Einheiten (2) gleichzeitig Informationen betreffend die Auslastung eines Interconnectanschlusses übersendet.

15. Verfahren nach mindestens einem der Ansprüche 5 bis 14, **dadurch gekennzeichnet,** daß der Switch (7) oder in Abhängigkeit von den vom Switch (7) übersandten Informationen das Managementsystem oder die TK-Einheit (2) festlegen, ob und in welchem Umfang Ortsgespräche über den dem Switch (7) zugeordneten Interconnectanschluß (5) geroutet werden.

16. Verfahren nach Anspruch 15, **dadurch gekennzeichnet,** daß der Switch (7) bzw. das Managementsystem der TK-Einheit (2) mitteilt, für eine bestimmte Zeit keine Ortsverbindungen mehr an einen Interconnectanschluß (5) zu routen.

17. Verfahren nach mindestens einem der Ansprüche 5 bis 16, **dadurch gekennzeichnet,** daß der dem Interconnectanschluß zugeordnete Switch (7) überwacht, wieviele Verbindungswünsche über den Interconnectanschluß (5) erfolgreich sind, und diese Information an die TK-Einheit (1, 2) und/oder ein Managementsystem sendet.

18. Verfahren nach mindestens einem der Ansprüche 5 bis 17, **dadurch gekennzeichnet,** daß der dem Interconnectanschluß (5) zugeordnete Switch (7) ab einer festlegbaren Auslastung des Interconnectanschlusses (5) Ortsverbindungen betreffende Verbindungswünsche zurückweist.

19. Verfahren nach mindestens einem der vorangehenden Ansprüche, **dadurch gekennzeichnet,** daß die rufende TK-Einheit (1, 2) bei Ortsgesprächen ein Routing über einen Interconnectanschluß (5) dadurch vornimmt, daß der Rufnummer der gerufenen TK-Einheit (9) bei der Signalisierung eine definierte Kennung hinzugefügt wird, wobei
a) die zugehörige Ortsvermittlungsstelle (4) des ersten Kommunikationsnetzes (3) die Verbindung aufgrund der hinzugefügten Kennung an einen Interconnectanschluß (5) zum zweiten Kommunikationsnetz (6) routet und
b) ein dem Interconnectanschluß (5) zugeordneter Switch (7) anhand der Kennung erkennt, daß es sich um eine Ortsverbindung handelt, und die Verbindung an das erste Kommunikationsnetz (3) zurückroutet bzw. das dritte Kommunikationsnetz (10) weiterroutet.

20. Verfahren nach Anspruch 19, **dadurch gekennzeichnet,** daß die Kennung zum einen die Rufnummer des zweiten Kommunikationsnetzes und zum anderen eine Zusatznummer (OVK) aufweist, die eine Regional- oder Fernverbindung betrifft, wobei der dem Interconnectanschluß zugeordnete Switch (7) anhand der Zusatznummer (OVK) erkennt, daß es sich um eine Ortsverbindung handelt.

21. Verfahren nach mindestens einem der Ansprüche 5 bis 20, **dadurch gekennzeichnet,** daß Signalisierungsinformationen zwischen dem Switch (7) und der TK-Einheit (1, 2) auf einem Signalisierungskanal, einem gesonderten Nutzkanal, oder über eine Inband-Signalisierung übertragen werden.

22. Verfahren nach mindestens einem der vorangehenden Ansprüche, **dadurch gekennzeichnet,** daß die rufende TK-Einheit mindestens ein TK-Endgerät (1) und eine Router-Einrichtung (2), insbesondere einen Least-Cost-Router aufweist, wobei eine Informationsübertragung bzw. Signalisierung mit einem einem Interconnectanschluß zugeordneten Switch (7) über die Router-Einrichtung (2) erfolgt.

23. Kommunikationssystem zum Management der Auslastung von Interconnectanschlüssen, über die ein erstes Kommunikationsnetz mit einem zweiten Kommunikationsnetz zusammengeschaltet ist (Interconnection), wobei das erste Kommunikationsnetz eine Vielzahl von Teilnehmeranschlüssen aufweist, an die jeweils mindestens eine TK-Einheit angeschlossen ist,
**gekennzeichnet durch**
a) erste Einrichtungen (7), die jeweils einem Interconnectanschluß (5) zugeordnet sind und die Mittel aufweisen, die die Auslastung des zugeordneten Interconnectanschlusses (5) überwachen;
b) zweite Einrichtungen (2), die den TK-Einheiten (1) zugeordnet sind und die erste Mittel aufweisen, durch die die Wählinformation abgehender Rufe mit einer Kennung versehbar ist, auf Grund derer abgehende, Ortsverbindungen betreffende Rufe an das zweite Kommunikationsnetz (6) geroutet werden, wobei
c) die ersten Einrichtungen (7) Mittel aufweisen, die in der Wählinformation die eingefügte Kennung und damit das Vorliegen einer Ortsverbindung erkennen, und die Verbindung daraufhin an das erste Kommunikationsnetz (3) zurück oder ein drittes Kommunikationsnetz (10) weiterrouten und
d) die ersten Einrichtungen (7) an die zweiten Einrichtungen (2) oder ein Managementsystem Informationen betreffend die Auslastung der Interconnectanschlüsse (5) senden und die zweiten Einrichtungen (2) jeweils zweite Mittel aufweisen, die in Abhängigkeit von Befehlen der ersten Einrichtungen (7) oder des Managementsystems bzw. in Abhängigkeit von der Auslastung der Interconnectanschlüsse die Anzahl der über das zweite Kommunikationsnetz (7) zu routenden Ortsverbindungen festlegen.

24. Kommunikationssystem nach Anspruch 23, **dadurch gekennzeichnet,** daß die ersten Einrichtungen Switch-Einrichtungen (7) sind, die jeweils unmittelbar hinter den Interconnectanschlüssen (5) im zweiten Kommunikationsnetz (6) angeordnet sind.

25. Kommunikationssystem nach Anspruch 23 oder 24, **dadurch gekennzeichnet,** daß die ersten Einrichtungen (7) jeweils die Switch-Matrix der über den jeweiligen Interconnectanschluß (5) geführten Verbindungen verwalten.

26. Kommunikationssystem nach mindestens einem der Ansprüche 23 bis 25, **dadurch gekennzeichnet,** daß die zweiten Einrichtungen Routing-Einrichtungen (2), insbesondere Least-Cost-Router sind, die teilnehmeranschlußseitig angeordnet sind, wobei die Routing-Einrichtungen als eigene Einheiten ausgebildet oder in die TK-Einheiten integriert sein können.

27. Routing-Einrichtung zur Durchführung des Verfahrens nach Anspruch 1,
**gekennzeichnet durch**
a) Mittel, die die Wählinformation abgehender Rufe mit einer Kennung versehen, die das Vorliegen einer Ortsverbindung kodiert, und
b) Mittel, die in Abhängigkeit von Informationen oder Befehlen einer Einrichtung eines Kommunikationsnetzes die Anzahl der Rufe festlegen, die mit einer Kennung betreffend das Vorliegen einer Ortsverbindung versehen werden.

28. TK-Einrichtung, insbesondere Switch, zur Durchführung des Verfahrens nach Anspruch 1,
**gekennzeichnet durch**
a) Mittel, die in der Wählinformation die Kennung einer Ortsverbindung erkennen, die über einen zugeordneten Interconnectanschluß an die Einrichtung geroutet wird, und die die Verbindung bei Vorliegen der Kennung über den Interconnectanschluß zurückrouten oder an einen weiteren Interconnectanschluß weiterrouten, und
b) Mittel, die die Auslastung des zugeordneten Interconnectanschlusses überwachen und diese Information an Routing-Einrichtungen übersenden.
